# EUROPEAN PATENT SPECIFICATION

(11) **EP 3 131 383 B1**
(45) Date of publication and mention of the grant of the patent: **07.07.2021**
(21) Application number: 15722281.1
(22) Date of filing: 10.04.2015
(51) Int. Cl.: A01F 15/07, A01F 15/08

(54) **APPARATUS FOR FORMING A ROUND BALE WITH A TENSIONED PRESSING MEANS**
VORRICHTUNG ZUR HERSTELLUNG EINES RUNDBALLENS MIT GESPANNTER PRESSEINRICHTUNG
APPAREIL DE FORMATION D'UNE BALLE CYLINDRIQUE AVEC DES MOYENS DE PRESSION SOUS TENSION

(30) Priority: 16.04.2014 NL 2012638
(43) Date of publication of application: 22.02.2017
(73) Proprietor: Forage Company B.V., 3147 PB Maassluis (NL)
(72) Inventor: DE JONG, Ruth, 3147 PB Maassluis (NL); REIJERSEN VAN BUUREN, Willem Jacobus, 3147PB Maassluis (NL)
(74) Representative: AGCO Intellectual Property Department
(86) International application number: PCT/NL2015/050236
(87) International publication number: WO 2015/160242

(56) References cited:
- EP-A1- 1 588 605
- EP-A1- 1 842 418
- US-A- 4 433 619
- US-A1- 2009 107 102
- US-B1- 6 843 170
- US-B2- 7 171 892

## Description

### Field of the Invention

The invention refers to a bale forming apparatus for forming a round-cylindrical bale from loose material, in particular from agricultural crop material by means of at least one endless pressing belt.

### Background of the Invention

A bale forming apparatus (round baler) with a variable chamber forms a cylindrical bale in a bale forming chamber and ejects it out of the bale forming chamber. Several parallel pressing belts press loose material in the bale forming chamber to form the cylindrical bale. Thanks to the pressing belts the same baler can create bales with different diameters.

In DE 3247661 A1 a round baler (Rollballenpresse 1) with a pivotal tailgate 13 is described. A first rigid floor (Boden 24) with two carriers (Trager 20) can be pivoted around a bearing pin (Lagerzapfen 22) extending perpendicular to the travelling direction of the baler 1. A second rigid floor (Boden 32) is pivotally connected with the first floor 24. The bale 29 is ejected out of the pressing chamber and rolls consecutively over both floors 24, 32 onto the ground.

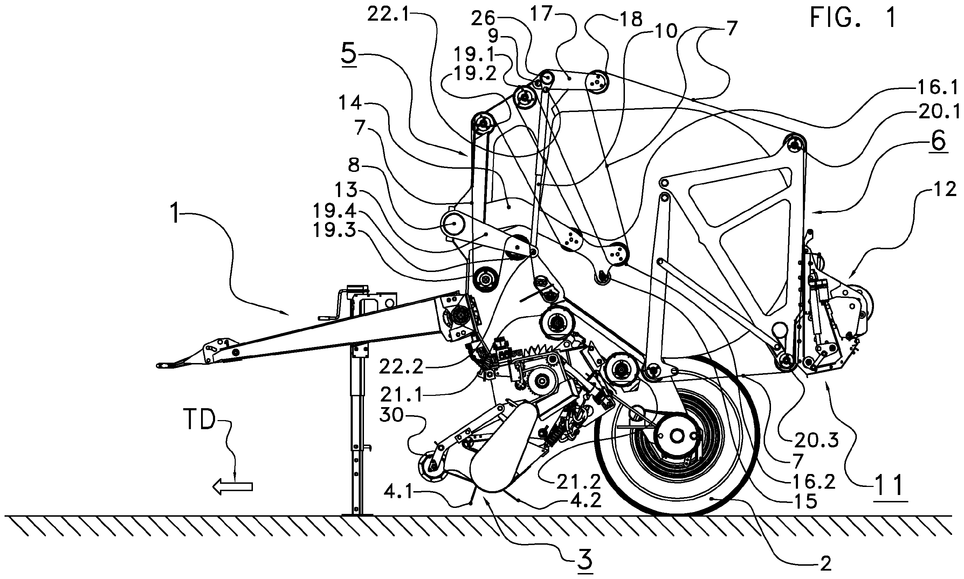

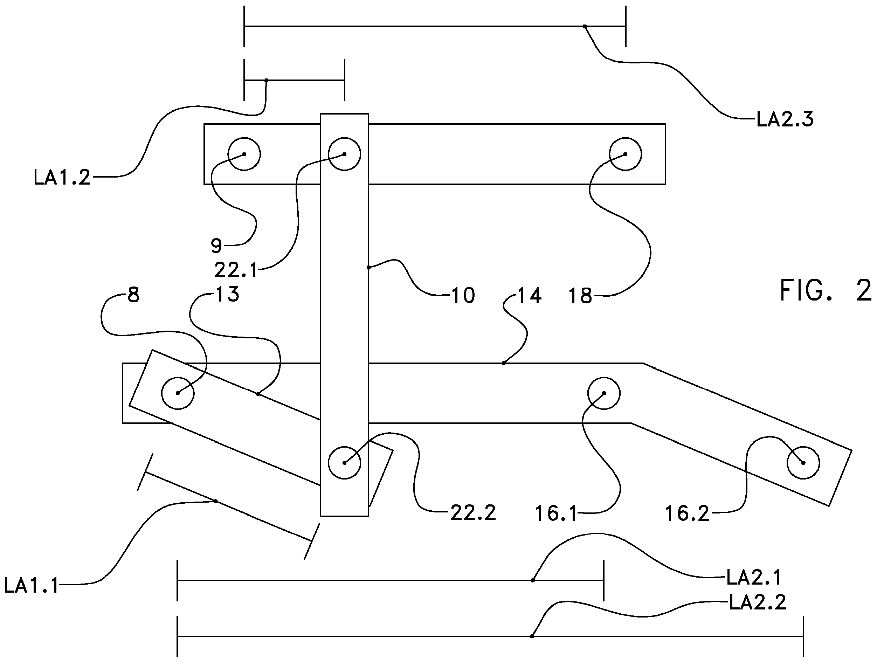

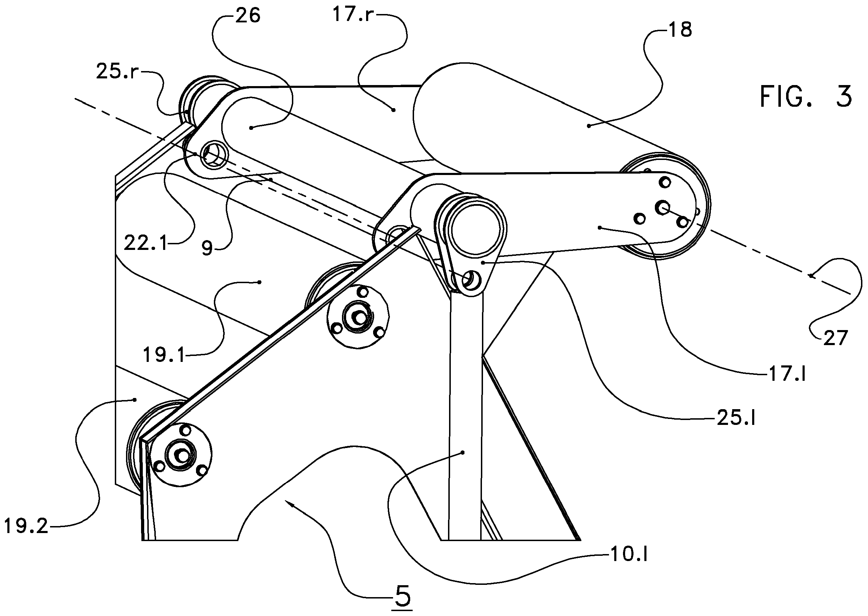

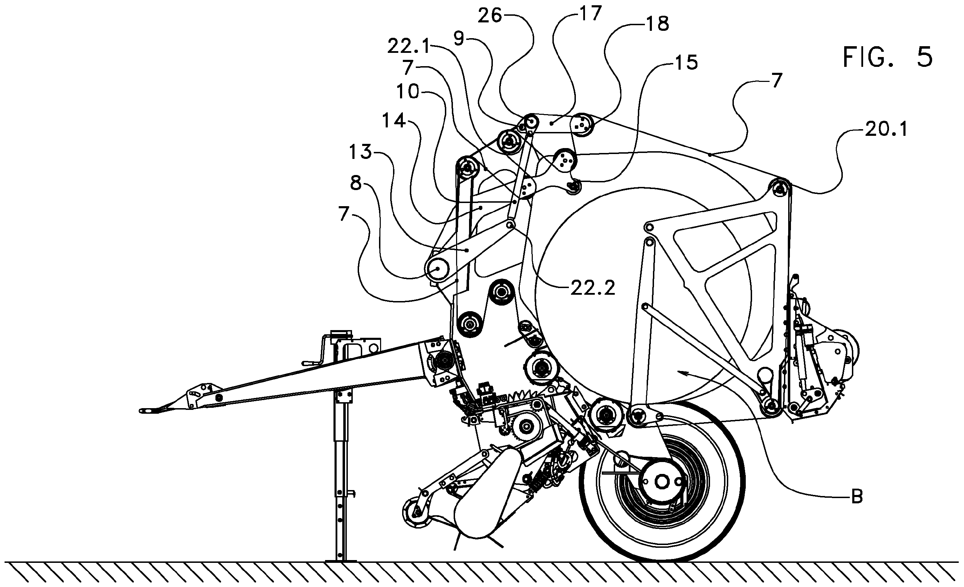

In US 4,258,619 a rotary baler with a bale ejector is described. An endless flexible web 30 with parallel belts 76 applies compacting pressure to a bale in a pressing chamber. The web 30 is guided around several guiding rollers. These guiding rollers 44, 46, 48 are carried by a slack take-up arm assembly 50 which is pivotally mounted between sidewalls 12, 14 of the front portion of the pressing chamber at a pivot point near the front edge of the baler, cf. Fig. 1 to Fig. 3. A spring 54 moves the arm assembly 50 downwards and tensions the web 30 (additional slack is paid out to web 30). The tailgate 58 is pivotally connected with the front portion via a transverse pivot 60. The web 30 is further tightened by a device 64 which projects rearwards from the front portion and which comprises a pair of L-shaped legs 66. Between the rear ends of the legs 66 a transverse tubular member 74 is arranged. The belts 76 of the web 30 are guided around and above the member 74, cf. Fig. 5. When the tailgate 58 is opened, the member 74 keeps its position and tensions the web 30, compare Fig. 1 with Fig. 2 and Fig. 3. The further the tailgate 58 is raised, the greater is the deflection of the span 72 of the web 30 by the member 74. Thereby the web 30 exerts a pushing or ejecting force against a bale 80.

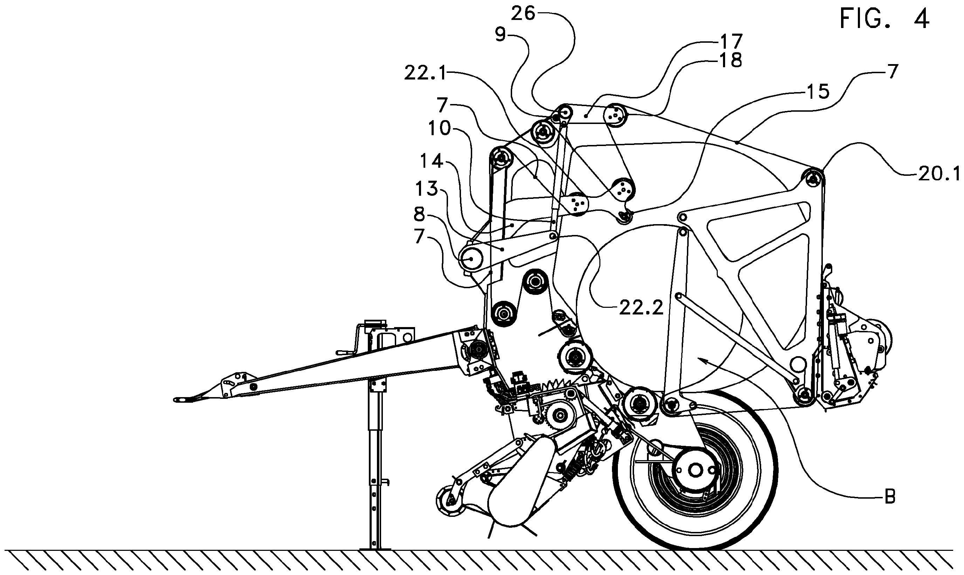

In EP 1842418 A1 a round bale ejecting arrangement is described. Several bale-forming belts 38 are guided around bale-forming belt-support rolls. A discharge gate 52 comprises triangular end members 54 which form a structure which can be pivoted around a horizontal axis 56, cf. Fig. 1 to Fig. 2, and which carries rolls 58, 60, 62. Fig. 4 shows a combined tensioning and ejecting arrangement 70 comprising a front tensioning arm assembly 72 carrying two rolls 80, 82 and a rear tensioning arm assembly 74 with two arms 86 carrying rolls 90, 92. The bale-forming belts 38 are guided around the rolls 80, 82, 90, 92 and around further rollers. Two double-acting cylinders 96 act as a tension actuator and can pivot the rear tensioning arm assembly 74 with respect to the front tensioning arm assembly 72. A single cylinder 98 acts as an ejection actuator and can pivot the rear tensioning arm assembly 74 in a direction opposite to that of the tension actuator 96.

In the beginning of the bale creation process (Fig. 5) the front arm assembly 72 of EP 1842418 A1 is positioned in a lowered position. The increasing bale 34 applies a pressing force onto the belts 38. This pivots the front arm assembly 72 upwards and pivots the rear arm assembly 74 in an opposite direction against the force of the tensioning actuator 96 until the two arm assemblies 72, 74 reach an upper position near the fixed guiding roller 50 as shown in Fig. 2. The tension actuator 96 is fully extended. The ejection actuator 98 is in a float condition. The discharge gate 52 is opened. The triangular end members 54 are pivoted upwards. The tension actuator 96 is set into a float condition. The ejection actuator 98 expands and pivots the rear arm assembly 74 backwards against the bale 24, Fig. 3. The roll 92 pushes the belts 38 against the bale 24. In an alternative embodiment (Fig. 5) the ejection actuator 98 is replaced with a coil extension spring 120. This spring 120 pivots the rear arm assembly 74 downwards and takes up belt slack when the tensioning actuators 96 are in a float condition while ejecting the bale.

The baler 10 of US 7,171,892 B2 forms a round bale by a baling means (several parallel belts 22). The belts 22 are guided over moveable rolls a, b, c mounted between the legs 42 of a first pivot arm 14, around moveable rolls d, e mounted between the legs 46 of a second pivot arm 16, a roll f mounted between the lever arm 48 of the second pivot arm 16, moveable rolls g, h mounted on a triangular unloading pivot frame 54, and several fixed rolls A to F. The first pivot arm 14 can pivot around an axis 40 and the second pivot arm 16 around an axis 45. In a first embodiment (Fig. 1 to Fig. 4) the positions of the pivot arms 14, 16 are controlled by one actuator 58. This actuator 58 is connected with lever arms 44 of the first pivot arm 14 and with lever arms 50 of the second pivot arm 16. In a second embodiment (Fig. 5 to Fig. 7) the positions of the two pivot arms 14, 16 are controlled by two separate actuators 80, 82. The pivoting axis 45 of the second pivot arm 16 is mounted in an upper front area of the pressing chamber.

EP 1588605 A1 discloses a round baler 10 with a first pivot arm 14 and a second pivot arm 16. Movable deflecting rollers a, b, c are mounted on the first pivot arm 14 and two further deflecting rollers d, e are mounted on the second pivot arm 16, cf. Fig. 1. And several endless pressing belts (baling means 22) are guiding around these five movable deflecting rollers a, ..., e and around further deflecting rollers A, ..., F which are stationary. In addition three deflecting rollers g, h, I are mounted on a unloading pivot frame 54. The increasing bale 38 pivots the second pivot arm 16 away from the first pivot arm 14, cf. Fig. 2. In order to unload the bale 38 the unloading pivot frame 54 is pivoted away from the first pivot arm 14 around a pivot axis 56, cf. Fig. 2 and Fig. 3.

### Summary of the Invention

US 4 433 619 discloses a bale forming apparatus for forming a round cylindrical bale from loose material.

An object of the invention is to provide a bale forming apparatus wherein the process reliability is high also when the moveable casing part is pivoted into the bale ejecting position and the bale is ejected.

The problem is solved by a bale forming apparatus with the features of claim 1 Preferred embodiments are specified in the depending claims.

The bale forming apparatus according to the present disclosure comprises
- a bale forming means comprising an endless pressing means,
- a tensioning arrangement for the pressing means,
- a bale pushing element, and
- a casing.

The tensioning arrangement comprises
- a tensioning actuator,
- a first pivotally mounted tensioning member, and
- a second pivotally mounted tensioning member,

The pressing means is guided around a first guiding element of the first tensioning member and is further guided around a second guiding element of the second tensioning member. Therefore the first guiding element as well as the second guiding element deflects the pressing means. The tensioning actuator tends to pivot the second tensioning member away from the first tensioning member.

The casing comprises a moveable casing part. The moveable casing part
- can be operated in a bale forming position and
- can be moved into a bale ejecting position.

The bale forming method is performed by using such a bale forming apparatus. The bale forming method comprises
- a bale forming phase in which the moveable casing part is operated in the bale forming position and
- a subsequent bale ejecting phase during which the moveable casing part is pivoted into the bale ejecting position.

In the bale forming phase the moveable casing part is in the bale forming position and the casing with the moveable casing part being in the bale forming position surrounds a bale forming chamber. Loose material is injected into this bale forming chamber and is contained in the bale forming chamber.

The bale forming means forma a bale in the bale forming chamber. The endless pressing means
- applies a pressing force onto this loose material and
- forms under pressure in the bale forming chamber an increasing round-cylindrical bale from the injected loose material.

In the bale ejecting phase the moveable casing part is moved into the bale ejecting position. An aperture in the casing is provided. The bale is ejected out of the bale forming chamber through this aperture.

During the bale forming phase the increasing bale in the bale forming chamber tends to expand the bale forming chamber and applies a force onto the endless pressing means. The pressing means subjected to this force tends to pivot the second tensioning member against the force of the tensioning actuator towards the first tensioning member.

The tensioning actuator is pretensioned, i.e. biased. Therefore it tends to pivot the second tensioning member away from the first tensioning member against the pivoting force of the pressing means. The tensioning actuator tends to do so in both positions of the moveable casing part and in both phases.

According to the present disclosure the bale forming apparatus further comprises the bale pushing element. This bale pushing element is mechanically connected with the first tensioning member. It can be a part of the first tensioning member.

The tensioning arrangement pivots the second tensioning member away from the first tensioning member against the force of the endless pressing means. This causes the first tensioning member to be pivoted towards the bale in the bale forming chamber. The pressing means surpasses the force of the tensioning actuator as long as the moveable casing part is in the bale forming position and during the bale forming phase. The tensioning actuator surpasses the force of the pressing means if the moveable casing part is in the bale ejecting position.

The bale pushing element being connected with the first tensioning member thereby contacts the bale. The connected bale pushing element pushes the bale towards the movable casing part. Thereby the bale is ejected out of the bale forming chamber during the bale ejecting phase.

### Advantages

The tension onto the pressing means decreases when the moveable casing part is moved into the bale ejecting position. The risk occurs that the pressing means loses contact with a guiding element. The risk of this undesired event is reduced by the invention.

Thanks to the invention the increasing bale and the tensioning arrangement together tension the pressing means. The endless pressing means is tensioned by the tensioning arrangement sufficiently and with high reliability also while and after a moveable casing part of a casing surrounding the bale forming chamber is moved into a bale ejecting position for ejecting the completed bale out of the bale forming chamber.

In particular the tensioning force caused by the tensioning actuator and applied onto the pressing means ensures that the pressing means remains guided by both guiding elements while the moveable casing part is moved into the bale ejecting position and also after the moveable casing part has reached the bale ejecting position.

The operation of the tensioning arrangement according to the invention avoids in particular the following undesired situation: The pressing means loses its contact with one guiding element while or after the moveable casing part is moved into the bale ejecting position. In this undesired situation the pressing means may hang loosely in the bale forming chamber. If the moveable casing part is later pivoted back into the bale forming position, the pressing means may not be guided properly or not been driven properly. This undesired event would require a manual repair step of a human operator and interrupts the regular operation.

According to the present disclosure the tensioning actuator tends to pivot the second tensioning member away from the first tensioning member in both positions of the moveable casing part and in both phases of the bale forming method. The invention saves the need to provide two different tensioning actuators a first actuator for tensioning the endless pressing means while the moveable casing part is in the bale forming position and a second actuator for tensioning the pressing means while the moveable casing part is in the bale ejecting position.

In contrast to a baler with two different tensioning actuators the invention makes it possible that the same tensioning actuator operates during both positions of the moveable casing part. This feature saves a further tensioning actuator. It is further not necessary to change the operating mode of the tensioning actuator as soon as the moveable casing part is moved into the bale ejecting position or in the beginning of the bale ejecting phase. In contrast and thanks to the invention the tensioning actuator can be operated in the same mode in both positions of the moveable casing part.

The invention enables implementing the tensioning actuator with passive elements, e.g. with helical or hydraulic springs. The tensioning actuator does not necessarily comprise a moveable element or a drive for such an element. Nevertheless the pressing means is sufficiently guided and tensioned in both phases of the bale forming and in particular if the moveable casing part is in the bale ejecting position and if no loose material is in the bale forming chamber.

The first tensioning member has two functions:
- Together with the second tensioning member it tensions the pressing means during both phases of the bale forming method and in both positions of the moveable casing part.
- In addition it helps to eject the bale out of the bale forming chamber after the moveable casing part is moved into the bale ejecting position.

This feature therefore saves a specific bale ejector which is only used for ejecting a bale and is not needed while the moveable casing part is in the bale forming position and is not needed in the bale forming phase. Often such a specific bale ejector has to be pivoted into a parking position during the bale forming phase. Space for the bale ejector being in the parking position has to be provided within the bale forming chamber.

The bale pushing element is connected with the first tensioning member. If the first tensioning member is pivoted towards a bale in the bale forming chamber, this connected bale pushing element contacts this bale and moves the bale towards the movable casing part. This step helps pushing the bale out of the bale forming chamber.

The first tensioning member can be used for tensioning the pressing means in both phases. The first tensioning member helps to eject the bale even if the bale has to be ejected against the force of gravity in an upwardly sloping direction. The tensioning actuator tends to pivot the first tensioning member away from the second tensioning member and towards and against the bale and thereby shifts the bale towards the moveable casing part. In the preferred embodiment with the first tensioning member additionally acting as a bale ejector the tensioning actuator pivots the first tensioning member - or a bale pushing element connected with the first tensioning member - against the pressing means and thereby against the bale in the bale forming chamber in both positions of the moveable casing part, in particular while and after the moveable casing part is pivoted into the bale ejecting position. This effect is achieved as the tensioning actuator pivots the second tensioning member away from the first tensioning member and thereby pivots the first tensioning member away from the second tensioning member and towards the bale.

The tensioning actuator tends to pivot both tensioning members away from each other. According to the present disclosure the tensioning actuator operates in this way in both phases. This feature ensures that the pressing means stays in contact with both guiding elements on the two tensioning members and remains guided and tensioned in both phases. The operation of the tensioning actuator needs not to be changed between the bale forming phase and the bale ejecting phase.

### Preferred Embodiments

According to an embodiment of the invention the second tensioning member comprises a first guiding element, a second guiding element, and a lever member for this second guiding element. The endless pressing means is guided around both guiding elements. The lever member is pivotally mounted at the casing. Thereby the lever member can pivot with respect to the casing around a lever pivoting axis. The second guiding element of the second tensioning member is mounted at a free end of this lever member. The tensioning actuator is pivotally connected with the lever member. The tensioning actuator can pivot with respect to the lever member around an actuator pivoting axis. This actuator pivoting axis is arranged between the second guiding element on the lever member and the lever pivoting axis. Therefore the lever arm provided between the lever pivoting axis and the actuator pivoting axis is shorter than the lever arm provided between the lever pivoting axis and the second guiding element.

An embodiment of the invention provides a simple way of calculating the diameter of a round-cylindrical bale in the bale forming chamber.

The increasing bale tends to apply a tensioning force onto the endless pressing means. This tensioning force depends on the bale diameter and tends to pivot the second tensioning member towards the first tensioning member against the force of the tensioning actuator. Therefore the tensioning force tends to move the second part towards the first part. The measured distance between the two parts depends on the bale diameter.

The bale forming apparatus can be a part of a vehicle and this vehicle is pulled over ground and may also be operated in a hilly environment. The situation can occur that the bale has to be ejected out of the bale forming chamber in an upwardly sloping direction against the force of gravity. The problem can arise that the bale is not ejected quickly enough or is even not ejected at all but remains in the bale forming chamber or rolls back into the bale forming chamber. In particular in this situation a bale ejector may help.

Preferably the force of gravity further supports the step that the first tensioning member or the connected bale pushing element ejects a bale out of the bale forming chamber. The first tensioning member is pivotally connected with a fixed housing part of the casing. The force of gravity together with the tensioning actuator tends to pivot the second tensioning member from above downwards and towards a bale in the bale forming chamber. The increasing bale pivots via the pressing means the first tensioning member as long as the moveable casing part is in the bale forming position. While or after the moveable casing part is moved with respect to the fixed casing part into the bale ejecting position, the force of gravity pivots the bale pushing element or the first tensioning member downwards such that the first tensioning member pushes the bale towards the provided aperture and ejects the bale out of the bale forming chamber.

Preferably the pressing means is arranged such that the pressing means surrounds a smaller part of the bale forming chamber while the moveable casing part is in the bale ejecting position than while it is in the bale forming position. Therefore the tension of the pressing means supports in ejecting the bale out of the bale forming chamber.

Preferably the bale is therefore ejected by at least one of the following means:
- the tension of the pressing means,
- the force of gravity of the first tensioning member,
- the bale pushing element, or
- the force of the tensioning actuator.

The tensioning actuator tends to pivot the second tensioning member away from the first tensioning member against the tensioning force of the pressing means. Preferably this tensioning force is larger if the moveable casing part is in the bale forming position than with the moveable casing part being in the bale ejecting position.

Preferably the first tensioning member is pivotally connected with the casing. In the bale forming phase the increasing bale applies a tensioning force onto the pressing means. The tensioned pressing means pivots the first tensioning member with respect to the casing and against the retaining force of the tensioning actuator.

Preferably every tensioning member comprises at least one guiding element and a lever member. The pressing means is guided around the respective guiding element. The lever member is pivotally connected with the casing such that a free end of the lever member is formed. The respective guiding element is mounted at this free end. The guiding element can comprise a rotatably mounted idler roller or a traversal rod, e.g.

In one embodiment the first tensioning member comprises two lever members which are rigidly connected with each other. At the free end of one lever member at least one guiding element is mounted such that the first tensioning member comprises the first and at least one further guiding elements. The tensioning actuator is pivotally connected with one lever member. Preferably the or every guiding element is mounted at a first lever member and the tensioning actuator is connected with a second lever member of the first tensioning member.

In one embodiment the tensioning actuator is pivotally connected with both tensioning members. This arrangement saves the need to connect the tensioning actuator with the casing or with a frame of the baler. The tensioning actuator can thereby (nearly) freely move while the tensioning members are pivoted by the pressing means during the bale forming phase. No mechanical connection with the frame limits this pivotal movement of the tensioning actuator.

During the bale forming phase the bale increases in the bale forming chamber. According to the third aspect this diameter is calculated depending on the measured distance between the two parts. Preferably the measured diameter is compared with a given diameter threshold. The bale formation is finished if the measured bale diameter reaches the given diameter threshold. Preferably the bale diameter is calculated depending on the distance and on at least one of the following further parameters:
- the pivoting angle of the first tensioning member with respect to the casing,
- the pivoting angle of the second tensioning member with respect to the casing, and
- the weight of the bale in the bale forming chamber.

In one implementation the tensioning actuator comprises a piston which can move in a hydraulic cylinder. The piston is connected with one part and the cylinder with the other part. The current position of this piston in the cylinder is measured and is used as a value indicative of the distance between the two guiding elements and therefore as a value indicative of the bale diameter.

In a further implementation the tensioning actuator comprises a helical spring. The current distance between the two fixing points of this helical spring is measured and serves as a value indicative of the bale diameter.

In one embodiment the second tensioning member is arranged above the first tensioning member. The tensioning actuator extends in an approximately vertical direction from the first to the second tensioning member. In one embodiment then tensioning actuator pivots the second tensioning member into a vertical position, in particular with the movable casing part being in the bale forming position.

In one embodiment the tensioning actuator comprises at least one hydraulic piston-cylinder device or at least one spring. The piston-cylinder device or spring tends to expand and to pivot the second tensioning member away from the first tensioning member by expanding. It suffices that the hydraulic piston-cylinder device or the spring operates in a single-acting mode. The expanding force applied by the hydraulic cylinder can be adjusted. The pressing means can comprise one endless elastic pressing belt or several parallel pressing belts or a set of parallel chains connected with traversal rods, e.g.

The endless pressing means can comprise one pressing belt or several parallel pressing belts. The endless pressing means can also comprise a chain conveyer or apron.

Preferably the bale in the bale forming chamber is wrapped into wrapping material (a net, a plastic sheet, or several strands of twine, i.e.) while the movable casing part is in the bale forming position and during the bale forming phase. In the bale ejecting phase the wrapped bale is ejected out of the bale forming chamber through the provided aperture.

In one embodiment the bale forming apparatus according to the invention is a part of a vehicle which is pulled over ground (self-propelled or pulled by a further vehicle). The vehicle picks-up loose material (grass, hay, straw, silage, or waste material, e.g.) from the ground, conveys it into the bale forming chamber, and creates round bales from the loose material.

These and other aspects of the invention and of the preferred embodiment will be even more apparent from the detailed embodiment as described below and will be elucidated in detail there.

### Brief Description of the Drawings

Fig.1 shows a round baler according to the invention with an empty bale forming chamber;
Fig. 2 shows five lever arms between the tensioning actuator and three guiding rollers;
Fig. 3 shows the second (upper) tensioning means in a perspective view.
Fig. 4 and Fig. 5 show the baler of Fig. 1 in the baling forming phase while a bale increases in the bale forming chamber;

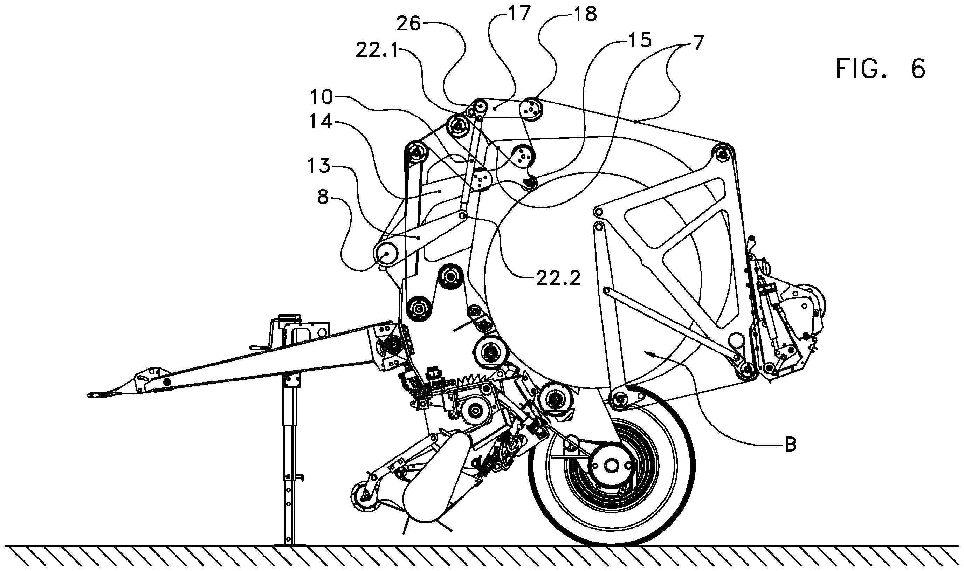

Fig. 6 shows the baler of Fig. 1 in the beginning of the bale ejecting phase wherein the bale is entirely created and wrapped but the tailgate is still in the bale forming position;

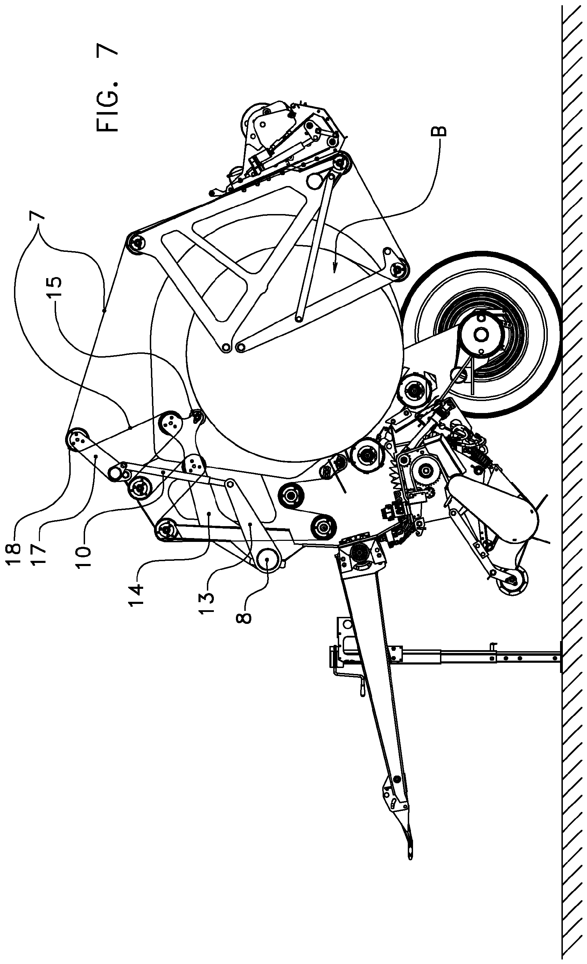

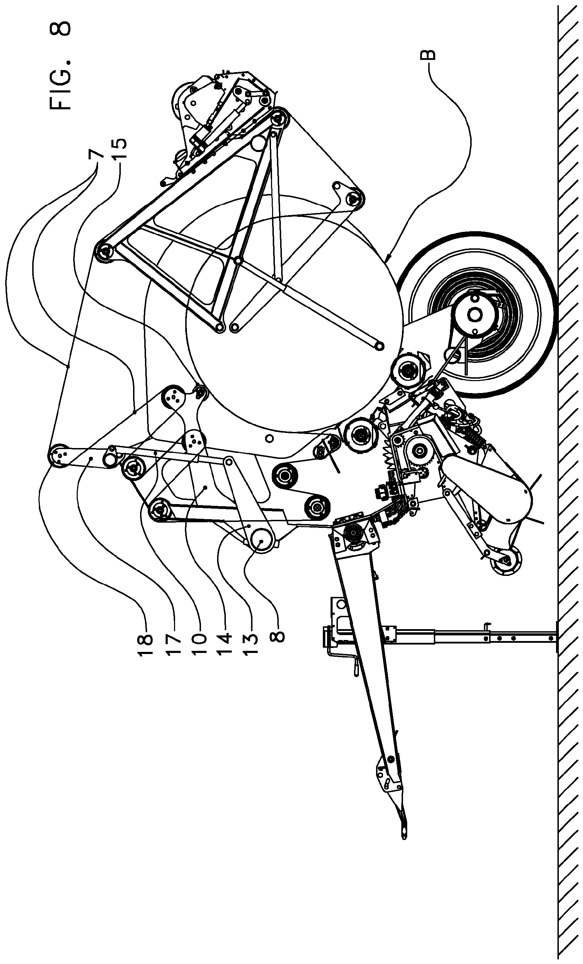

Fig. 7 and Fig. 8 show the baler of Fig. 6 while the tailgate is pivoted from the bale forming position into the bale ejecting position;

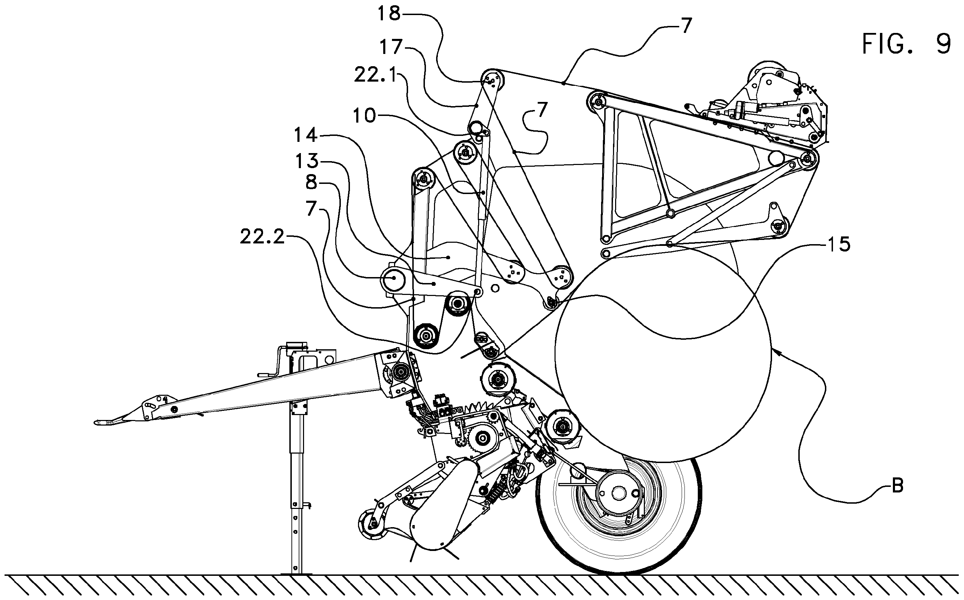

Fig. 9 shows the baler of Fig. 6 wherein the tailgate has reached the bale ejecting position and the step of ejecting the bale has started;

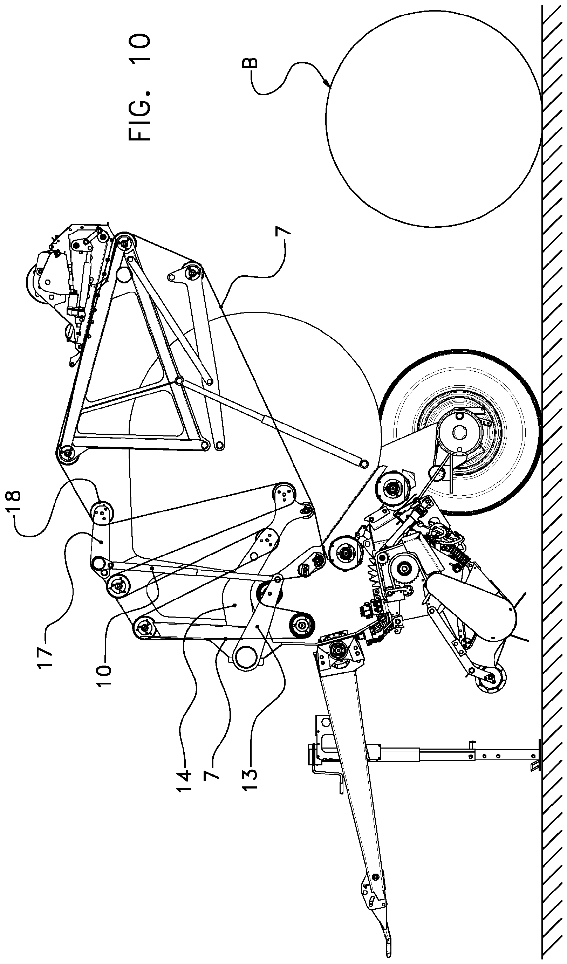

Fig. 10 shows the baler of Fig. 7 wherein the bale has been ejected and the tailgate is still in the bale ejecting position.

### Detailed Description of Embodiment

In the embodiment the invention is used in an agricultural vehicle which is moved over ground in a travelling direction TD, e.g. by being pulled by a tractor, a combine harvester, or a field chopper. Or the vehicle comprises an own motor, i.e. is self-propelled.

A bale forming apparatus being part of this vehicle
- picks up loose crop material (hay, straw, grass, silage, e.g.) from the ground,
- conveys this crop material in a direction opposite to the travelling direction TD towards a bale forming chamber,
- injects the crop material into the bale forming chamber,
- and forms under pressure a round-cylindrical bale in the bale forming chamber.

This round-cylindrical bale has two parallel circular front faces and a cylindrical circumferential surface extending between these two front faces. The bale forming apparatus wraps this formed bale in the bale forming chamber into wrapping material (strands of twine, a net, or a plastic foil, e.g.), opens a tailgate, ejects the bale out of the bale forming chamber, and deposits the wrapped bale onto the ground.

The bale forming chamber is partially surrounded by an endless pressing means, e.g. by several parallel pressing belts or pressing chains. The diameter of the drum-shaped bale forming chamber increases while and as the bale is increasing, i.e. the bale forming chamber has a variable size.

Fig. 1 shows in a side view the bale forming apparatus of the embodiment in a state before the creation of a round bale has started. The bale forming chamber is therefore empty. The baler is propelled in the traveling direction TD (in Fig. 1 from right to left). The following baler parts are shown in Fig. 1:
- a towing unit 1 for coupling the non-propelled round baler with a pulling vehicle,
- a left wheel 2 and a corresponding right wheel (not shown),
- a pick-up unit 3 with several spring-mounted tines 4.1, 4.2,
- a pivotal downholder 30 arranged angularly above the pick-up unit 3,
- a casing with a front housing (fixed casing part) 5 and a tailgate (moveable casing part) 6,
- two driven starter rollers 21.1, 21.2 implemented as pressing rollers and forming the borders of the inlet for crop material wherein the inlet guides into the bale forming chamber,
- an endless pressing means 7 comprising several parallel pressing belts which partially surround the bale forming chamber,
- a lower tensioning member which can be pivoted with respect to the front housing 5 around a lower horizontal pivoting axis 8 being perpendicular to the travelling direction TD,
- an upper tensioning member which can be pivoted with respect to the front housing 5 around an upper horizontal pivoting axis 9 being parallel to the lower pivoting axis 8,
- an approximately vertical tensioning actuator 10,
- several guiding rollers 19.1, 19.2, 19.3 mounted at the front housing 5,
- several guiding rollers 20.1, 20.2, 20.3 mounted at the tailgate 6, and
- a wrapping apparatus 11 with a rotatably mounted wrapping material reel 12 wherein the wrapping apparatus 11 is mounted at the tailgate 6.

In Fig. 1 the tailgate 6 is in a bale forming position and is connected with the front housing 5, e.g. by two locking pawls engaging two corresponding pins. The wrapping apparatus 11 is rigidly mounted at the tailgate 6.

The lower tensioning member serves as the first tensioning member and comprises
- a lower first lever member 13,
- a lower second lever member 14 with a bifurcation providing two free ends,
- a bale pushing element 15 mounted at one free end of the lower second lever member 14,
- one lower moveable guiding roller 16.2 mounted at the other free end of the lower second lever member 14, and
- a further lower moveable guiding roller 16.1 mounted at the lower second lever member 14 between the lower pivoting axis 8 and the other free end with the roller 16.2.

The lower first lever member 13 connects the tensioning actuator 10 with the upper first member 14 and does not carry a guiding roller. The two lower lever members 13, 14 are rigidly connected with each other by means of a tube defining the lower pivoting axis 8.

The upper tensioning member serves as the second tensioning member and comprises
- one upper lever member 17 and
- one upper moveable guiding roller 18 mounted on the free end of the upper lever member 17.

The parallel endless pressing belts 7 are guided around several guiding rollers, among them the following rollers:
- the lower moveable guiding rollers 16.1, 16.2 of the lower tensioning member,
- the upper moveable guiding roller 18 of the upper tensioning member,
- the stationary guiding rollers 19.1, 19.2, 19.3 mounted at the front housing 5, and
- the stationary guiding rollers 20.1, 20.2, 20.3 mounted at the tailgate 6.

At least one guiding roller mounted at the front housing 5 is driven and moves the pressing means 8.

Every lever member 13, 14, 17 comprises - seen in the travelling direction TD - a left lever holding arm and a right lever holding arm. At its free end every lever member 13, 14, 17 carries a guiding roller 16.1, 16.2, 18 which can rotate around its own rotational axis with respect to the lever member. This guiding roller is rotatably arranged between the two lever holding arms. Every lever member can be pivoted around a pivoting axis 8, 9 with respect to the front housing 5 and extends rearward from this pivoting axis. This pivoting axis extends perpendicular to the travelling direction TD and to the drawing plane of Fig. 1.

In place of a guiding roller an alternative guiding element may be used, i.e. a traversal bearing or a rod with a smooth surface with low friction.

In the embodiment the bale pushing element 15 comprises a traversal rod which is rigidly or rotatably mounted between the two lever holding arms of the lower second lever member 14. It is also possible that one guiding roller further serves as a bale pushing element touching and pushing a bale in the bale forming chamber.

Fig. 1 shows the upper lever pivoting axis 9 for the upper lever member 17 of the upper tensioning member. The two lower lever members 13, 14 of the lower tensioning member are rigidly connected with each other and are both pivotal around the same lower lever pivoting axis 8. A distance between the two pivoting axes 8, 9 occurs.

The tensioning actuator 10 is pivotally connected
- with the upper lever member 17 in an upper pivoting axis 22.1 and
- with the lower first lever member 13 in a lower pivoting axis 22.2.

The tensioning actuator 10 is biased. The biased tensioning actuator 10 tends to shift the upper pivoting axis 22.1 away from the lower pivoting axis 22.2, i.e. to increase the distance between these two pivoting axes 22.1, 22.2.

In one implementation a distance sensor (not shown) measures the distance between the two pivoting axes 22.1, 22.2 and thereby the length of the actuator 10. This measured distance is a value indicative of the tension applied by the pressing belts 7 onto the tensioning actuator 10. This tension tends to reduce the length of the tensioning actuator 10.

Fig. 2 shows five lever arms between the tensioning actuator 10 and three guiding roller 16.1, 16.2, 18. As can be seen in Fig. 1 and Fig. 2 the following two lever arms for the tensioning actuator 10 with respect to the guiding roller 18 on the lever member 17 occur:
- LA 1.1 from the lower pivoting axis 8 of the lower tensioning member 13, 14 to the lower pivoting axis 22.2 of the tensioning actuator 10,
- LA 1.2 from the upper pivoting axis 9 of the upper tensioning member 17 to the upper pivoting axis 22.1 of the tensioning actuator 10.

The following three lever arms for guiding rollers occur:
- LA 2.1 from the lower pivoting axis 8 of the lower tensioning member to the rotating axis of the lower moveable guiding roller 16.1,
- LA 2.2 from the lower pivoting axis 8 to the rotating axis of the lower moveable guiding roller 16.2, and
- LA 2.3 from the upper pivoting axis 9 of the upper tensioning member 17 to the rotating axis 27 of the upper moveable guiding roller 18.

In the embodiment the length of the lever arm LA 1.2 at the upper lever member 17 for the tensioning actuator 10 is much smaller than the length of the lever arm LA 2.3 at the upper lever member 17 for the upper moveable guiding roller 18, preferably less than 25 % of LA 2.3, cf. Fig. 2. The effect achieved by this implementation is described below.

The length of the lever arm LA 1.1 at the lower lever member 14 for the tensioning actuator 10 is also smaller than the length of the lever arm LA 2.1 for the lower moveable guiding roller 16.1 but has at least half the length of LA 2.1. The lever arm LA 2.2 is larger than the lever arm LA 2.1.

Fig. 3 shows in a perspective view the upper tensioning member 17 and an upper part of the tensioning actuator 10. The pressing belts and the casing are not shown for sake of clarity.

Fig. 3 shows the following parts:
- the tensioning actuator 10,
- the upper moveable guiding roller 18 which can rotate around the rotating axis 27,
- the left lever holding arm 17.1 and the right lever holding arm 17.r of the upper lever member 17 which can rotate synchronously around the axis 9,
- a hollow axle 26 rigidly connected with the lever holding arms 17.1, 17.r,
- two connecting rods 25.1, 25.r rigidly connected with the axle 26 and pivotally connected with the tensioning actuator 10 in the pivoting axis 22.1, and
- two stationary guiding rollers 19.1, 19.2 mounted at the front housing 5.

The terms "left" and "right" refer to the travelling direction TD.

Fig. 3 shows a left tensioning actuator member 10.1 pivotally connected with the left connecting rod 25.1. The right tensioning actuator member is not shown in Fig. 3 and is pivotally connected with the right connecting rod 25.r. In the following the term "tensioning actuator 10" denotes the arrangement with the left tensioning actuator member 10.I and the right tensioning actuator member.

In the embodiment the tensioning actuator 10 comprises a left piston-cylinder device 10.1 (part of the left tensioning actuator member) containing a left piston, a right piston-cylinder device (part of the right tensioning actuator member) containing a right piston, a closed loop for fluid, and a relief valve. The piston head of the piston in a hydraulic cylinder delimits an upper cylinder chamber (piston rod side) and a lower cylinder chamber (base side) both filled with a fluid. In the embodiment the pressing means 7 tends to press the piston into the cylinder, thereby shortening the left tensioning piston-cylinder device 10.1. If the pressure from above onto the piston exceeds a given threshold, the valve is opened, fluid can flow from the lower chamber through the relief valve into the upper chamber, and the length of the tensioning actuator 10 is reduced. In a further implementation the pressing belts 7 tend to pull the pistons of the tensioning actuator 10 out of the respective cylinder.

It is also possible to use helical springs in place of hydraulic cylinders. These springs tend to expand and can be compressed against the spring force. Thanks to the invention the tensioning actuator 10 needs not to be switched or adjusted during operation, in particular not at the end of the bale forming phase. As mentioned above the length of the tensioning actuator 10 is measured. The measured length is used for deriving the bale diameter.

The left piston-cylinder device 10.1 of the tensioning actuator 10 is connected with the left connecting rod 25.1 and the right piston-cylinder device with the right connecting rod 25.r. The tensioning actuator 10 can pivot with respect to the two connecting rods 25.1, 25.r and thereby to the upper tensioning member around the upper pivoting axis 22.1. The lever member 17 can pivot with respect to the front housing 5 around the upper pivoting axis 9.

In the situation shown in Fig. 1 the bale forming chamber is empty. The tensioning actuator 10 is fully expanded, i.e. the distance between the pivoting axes 22.1 and 22.2 is maximal.

Loose crop material is picked up from the ground and is injected through the inlet between the starter rollers 21.1, 21.2 into the bale forming chamber. This bale forming chamber is surrounded by the pressing belts 7 and the starter rollers 21.1, 21.2. The pressing belts 7 are driven by at least one driven guiding roller (in Fig. 1 driven anti-clockwise) and form under pressure an increasing bale B.

In the embodiment the guiding rollers 16.1, 16.2, 18 of the tensioning members are the only moveable guiding rollers for the pressing belts 7. "Moveable" means: the rollers can be shifted in a direction perpendicular to their own respective rotating axes. Therefore the pressing belts 7 tensioned by the increasing bale B can only move laterally these three guiding rollers 16.1, 16.2, 18. The other guiding rollers are stationary, e.g. can only rotate around their own rotating axes. The step of moving these moveable guiding rollers 16.1, 16.2, 18 changes the positions of the pistons in the cylinders of the tensioning actuator 10. Therefore these piston positions are a measure for the bale diameter. In one implementation these piston positions are measured during the bale forming phase and serve as a value indicative of the bale diameter. It is also possible to measure the length of the tensioning actuator 10 as described above.

Fig. 4 and Fig. 5 show two different situations during the bale forming phase. In Fig. 4 the bale B has not yet reached a required final size (diameter). In Fig. 5 the bale B has reached the required size and the wrapping procedure starts. During the wrapping procedure the bale B in the bale forming chamber is wrapped into wrapping material (into a net or a plastic film or strands of twine, e.g.). A web of wrapping material is pulled from the supply reel 12 and is injected into the bale forming chamber. The bale forming phase is finished when the required numbers of wrapping material layers are placed around the bale B in the bale forming chamber. Afterwards the web of wrapping material is severed.

As can be seen in Fig. 4 and Fig. 5, the increasing bale B applies a tensioning force onto the pressing means 7. Those segments of the pressing belts 7 which surround the bale forming chamber are made longer and the further segments of the pressing belts 7 are made shorter. Therefore the pressing means 7 pulls at the moveable guiding rollers 16.1, 16.2, 16.3, 18. This has at least one of the following effects:
- The upper tensioning member with the upper moveable guiding roller 18 is pivoted downwards.
- The lower tensioning member with the lower moveable guiding rollers 16.1, 16.2, 16.3 is pivoted upwards.

As the two tensioning members are pivoted against each other, the distance between the two pivoting axes 22.1, 22.2 of the tensioning actuator 10 is reduced. This distance reduction is enforced against the retaining force of the tensioning actuator 10. The pistons of the tensioning actuator 10 are pressed into the hydraulic cylinders. Or the springs of the tensioning actuator 10 are compressed. In both implementations the length of the tensioning actuator 10 is reduced.

The diameter of the increasing bale B in the bale forming chamber is measured and compared with a given threshold (the required final diameter). In the embodiment the diameter is derived from the following two measured values:
- the distance between the two pivoting axes 22.1 and 22.2 of the tensioning actuator 10, i.e. the length of the tensioning actuator 10, and
- the pivoting angle of the lower tensioning member around the pivoting axis 8with respect to the front housing 5.

The tensioning actuator 10 continuous to press against both tensioning members against the tensioning force of the pressing means 7 until the bale reaches its final diameter and is wrapped and no further crop material is injected into the bale forming chamber. This keeps the pressing means 7 being guided by the guiding rollers 16.1, 16.2, 18.

The lever arm LA 1.2 between the upper pivoting axis 8 of the upper tensioning member and the upper pivoting axis 22.1 of the tensioning actuator 10 is much shorter than the lever arm LA 2.3, cf. Fig. 2. Therefore the pressing means 7 pivots downwards the upper tensioning member against the force of the tensioning actuator 10 into an approximately horizontal position as shown in Fig. 4 to Fig. 6. The tensioning actuator 10 presses from above against the lower tensioning member and forces the lower tensioning member downwards. The moveable guiding rollers 16.1, 16.2, 18 are pressed against the pressing means 7 and keep it tensioned. The tailgate 6 remains in the bale forming position during the entire bale forming phase.

In the situation shown in Fig. 6 the bale in the bale forming chamber is entirely wrapped into wrapping material. The tailgate 6 is still in the bale forming position. The tensioned pressing belt 7 applies a pivoting force onto the upper tensioning member which pivots the upper tensioning member. Therefore the bale pushing element 15 on the lower second lever member 14 touches the circumferential surface of the bale B from angularly above.

In the situation shown in Fig. 6 the mechanical connection between the front housing 5 and the tailgate 6 has been released. The tailgate 6 starts its pivotal movement away from the front housing 5 from the bale forming position into the bale ejecting position. In the embodiment two vertical hydraulic piston-cylinders devices (not shown) are expanded and pivot the tailgate 6 upwards and away from the front housing 5.

Fig. 7 and Fig. 8 show two intermediate situations during the pivotal movement of the tailgate 6 from the bale forming position into the bale ejecting position. The tailgate 6 has not yet reached the bale ejecting position (the fully opened position). In Fig. 9 the tailgate 6 has reached the bale ejecting position. An aperture for ejecting the bale B is provided.

The tensioning actuator 10 remains pretensioned (biased) and tends to pivot the upper tensioning member 17, 18 away from the lower tensioning member throughout the entire bale ejecting phase. A comparison of Fig. 4 to Fig. 6 with Fig. 7 to Fig. 9 shows that in Fig. 7 to Fig. 9 the upper tensioning member 17, 18 is pivoted upwards and away from the bale B. The pivotal movement of the upper tensioning member 17, 18 is effected by the biased tensioning actuator 10. As the tailgate 6 is no longer in the bale forming position, the tensioning force which the pressing means 7 applies onto the upper guiding roller 18 and therefore onto the upper tensioning member 17, 18 decreases. Despite of the short lever arm LA 1.2 and of the long lever arm LA 2.3 the tensioning actuator 10 can now surpass the tensioning force of the pressing means 7 and can pivot upwards the upper tensioning member 17, 18. The upper tensioning member 17, 18 can reach an approximately vertical position, cf. Fig. 8.

Without this pivotal movement caused by the tensioning actuator 10 the pressing means 7 may lose its contact with a guiding roller and may hang in a loose position into the bale forming chamber. If the tailgate 7 is later moved back into the bale forming position for creating a new bale, the pressing means 7 would perhaps not be guided properly or not be driven properly by a guiding roller. The invention avoids this undesired situation as the tensioning actuator 10 pivots the upper tensioning member 17, 18 away from the lower tensioning member. This effect is achieved without changing an operating parameter of the tensioning actuator 10.

The tensioning actuator 10 continues to apply a force onto the two tensioning members. Due to the short lever arm LA 1.2 the upper pivoting axis 22.1 of the tensioning actuator 10 can only be moved upwards along a small distance. Therefore the tensioning actuator 10 pivots the lower pivoting axis 22.2 and therefore the lower tensioning member downwards. This effect, the tensioning force of the pressing belts 7, and the force of gravity pivot the lower tensioning member against the bale B. The connected bale pushing member 15 applies a pushing force from angularly above onto the circumferential surface of the wrapped bale B. The tensioning actuator 10 operates like a spring if the bale B applies a counter-acting force back onto the bale pushing element 15. The pivoted bale pushing member 15 and the spring-like effect help to eject the bale B quickly out of the bale forming chamber. The bale pushing element 15 hits the bale B. Additionally the pressing means 7 helps to eject the bale B.

In the embodiment the tensioning actuator 10 is connected with the upper tensioning member via the connecting rods 25.1, 25.r, see Fig. 3. Therefore the tensioning actuator 10 can pivot the upper tensioning member anti-clockwise into an approximately vertical position (Fig. 8) and further away from the tailgate 6 (Fig. 9, Fig. 10). This effect further tensions the pressing means 7 and avoids the undesired situation that the pressing means loses contact to the guiding rollers.

Fig. 10 shows a situation in which the bale B is entirely ejected out of the bale forming chamber and is deposited onto the ground. It is possible that a tilting unit tilts the wrapped bale B onto a front face. The tailgate 6 is on its way back into the bale forming position. As no bale is in the bale forming chamber, the force of gravity pivots the lower tensioning member downwards. The force of gravity, the tensioning actuator 10 being fully expanded, and the pressing means 7 pivot the upper tensioning member downwards. The situation of Fig. 1 occurs again. A further bale can be formed in the bale forming chamber.

Reference signs used in the claims will do not limit the scope of the claimed invention. The term "comprises" does not exclude other elements or steps. The articles "a", "an", and "one" do not exclude a plurality of elements. Features specified in several depending claims may be combined in an advantageous manner.

### List of Reference Signs

| | |
|---|---|
| B | round bale |
| TD | travelling direction |
| 1 | towing unit for coupling the baler with pulling vehicle |
| 2 | left wheel |
| 3 | pick-up unit |
| 4.1, 4.2 | spring-mounted tines of the pick-up unit 3 |
| 5 | front housing (fixed casing part) |
| 6 | pivotal tailgate (moveable casing part) |
| 7 | pressing means comprising several parallel pressing belts, partially surrounds the bale forming chamber |
| 8 | lower pivoting axis around which the lower tensioning member can be pivoted with respect to the front housing 5 |
| 9 | upper pivoting axis around which the upper tensioning member can be pivoted with respect to the front housing 5 |
| 10 | tensioning actuator, connected with the lower first member 13 and the upper lever member 17 |
| 11 | wrapping apparatus, mounted at the tailgate 6 |
| 12 | wrapping material reel of the wrapping apparatus 11 |
| 13 | lower first lever member of the lower tensioning member, connected with the tensioning actuator 10 |
| 14 | lower second lever member of the lower tensioning member |
| 15 | bale pushing element, mounted at the lower second lever member 14 |
| 16.1, 16.2 | lower moveable guiding rollers, mounted at the lower second lever member 14 |
| 17 | upper lever member, connected with the tensioning actuator 10 |
| 17.1 | left lever holding arm of the upper lever member 17 |
| 17.r | right lever holding arm of the upper lever member 17 |
| 18 | upper moveable guiding roller, mounted at the upper lever member 17 |
| 19.1, 19.2, 19.3 | stationary guiding rollers mounted at the front housing 5 |
| 20.1, 20.2, 20.3 | stationary guiding rollers mounted at the tailgate 6 |
| 21.1, 21.2 | starter rollers, form the borders of the crop material inlet |
| 22.1 | upper pivoting axis of the tensioning actuator 10 |
| 22.2 | lower pivoting axis of the tensioning actuator 10 |
| 25.1 | left connecting rod between upper lever member and tensioning actuator 10 |
| 25.r | right connecting rod between upper lever member 17 and tensioning actuator 10 |
| 26 | traversal axle, rigidly connected with the lever holding arms 17.1, 17.r |
| 27 | rotating axis of the upper guiding roller 18 |
| 30 | down holder |
| B | bale created and wrapped in the bale forming chamber |
| LA 1.1 | lever arm lower pivoting axis 1 - lower pivoting axis 22.2 |
| LA 1.2 | lever arm upper pivoting axis 9 - upper pivoting axis 22.1 |
| LA 2.1 | lever arm lower pivoting axis 8 - rotating axis of guiding roller 16.1 |
| LA 2.2 | lever arm lower pivoting axis 8 - rotating axis of guiding roller 16.2 |
| LA 2.3 | lever arm upper pivoting axis 9 - rotating axis of guiding roller 18 |
| TD | travelling direction |

## Claims

1. Bale forming apparatus for forming a round-cylindrical bale (B) from loose material,
wherein the bale forming apparatus comprises
- a bale forming means (7, 21.1, 21.2) comprising an endless pressing means (7),
- a tensioning arrangement for the pressing means (7),
- a bale pushing element (15), and
- a casing (5, 6) comprising a moveable casing part (6),
wherein the tensioning arrangement comprises
- a tensioning actuator (10),
- a first pivotally mounted tensioning member (13, 14, 16.1, 16.2) comprising at least one first guiding element (16.1, 16.2), and
- a second pivotally mounted tensioning member (17, 18) comprising at least one second guiding element (18),
wherein the bale pushing element (15) is mechanically connected with the first tensioning member (13, 14, 16.1, 16.2),
wherein the moveable casing part (6) is moveable between
- a bale forming position and
- a bale ejecting position,
wherein the casing (5, 6) with the moveable casing part (6) being in the bale forming position surrounds a bale forming chamber,
wherein the bale forming means (7, 21.1, 21.2) is arranged to form the cylindrical bale (B) in the bale forming chamber surrounded by the casing (5, 6),
wherein the casing (5, 6) with the moveable casing part (6) being in the bale ejecting position provides an aperture for ejecting the formed bale (B) out of the bale forming chamber,
wherein the pressing means (7) is guided
- around the first guiding element (16.1, 16.2) of the first tensioning member (13, 14, 16.1, 16.2) and
- around the second guiding element (18) of the second tensioning member (17, 18), and
wherein the tensioning actuator (10) tends to pivot the second tensioning member (17, 18) away from the first tensioning member (13, 14, 16.1, 16.2),
thereby applying a tensioning force onto the pressing means (7),
wherein the pressing means (7) being guided around both tensioning members (13, 14, 16.1, 16.2, 17, 18) tends to pivot the second tensioning member (17, 18) against the force of the tensioning actuator (10)
towards the first tensioning member (13, 14, 16.1, 16.2),
**wherein**
the bale forming apparatus is arranged such that
the tensioning actuator (10) tends to pivot the second tensioning member (17, 18) away from the first tensioning member (13, 14, 16.1, 16.2)
in both positions of the moveable casing part (6),
wherein the bale forming apparatus is arranged such that
the pressing means (7) surpasses the force of the tensioning actuator (10) as long as the moveable casing part (6) is in the bale forming position, and
the tensioning actuator (10) surpasses the force of the pressing means (7) if the moveable casing part (6) is in the bale ejecting position.
wherein the tensioning arrangement is arranged such that
pivoting the second tensioning member (17, 18) away from the first tensioning member (13, 14, 16.1, 16.2)
pivots the first tensioning member (13, 14, 16.1, 16.2) towards the bale (B) in the bale forming chamber and
causes the connected bale pushing element (15)
- to contact the bale (B) and
- to push the bale (B) towards the moveable casing part (6)
wherein the bale forming apparatus comprises a distance sensor,
wherein the distance sensor is arranged to measure a value indicative of the distance between the two guiding elements (16.1, 16.2, 18).

2. Bale forming apparatus according to the preceding claim, **characterized in that**
the endless pressing means (7) tends to apply pressure onto loose material contained in the bale forming chamber,
thereby forming under pressure the bale (B) in the bale forming chamber surrounded by the casing (5, 6),
wherein the endless pressing means (7) tends to pivot
the second tensioning member (17, 18) against the force of the tensioning actuator (10) towards the first tensioning member (13, 14, 16.1, 16.2).

3. Bale forming apparatus according to one of the preceding claims,
**characterized in that**
the casing (5, 6) comprises a further casing part (5),
wherein the moveable casing part (6) is mounted for being moved with respect to the further casing part (5) into the bale ejecting position, and
wherein the first tensioning member (13, 14, 16.1, 16.2) is pivotally connected with the further casing part (5)
such that the force of gravity tends to pivot the first tensioning member (13, 14, 16.1, 16.2) from angularly above towards a bale (B) in the bale forming chamber.

4. Bale forming apparatus according to one of the preceding claims,
**characterized in that**
the tensioning actuator (10)
- is pivotally connected with the first tensioning member (13, 14, 16.1, 16.2) and
- is pivotally connected with the second tensioning member (17, 18).

5. Bale forming apparatus according to one of the preceding claims,
**characterized in that**
the second tensioning member (17, 18) is positioned above the first tensioning member (13, 14, 16.1, 16.2),
wherein the tensioning actuator tends to pivot the second tensioning member (17, 18) into a substantially vertical orientation
when the moveable casing part (6) is in the bale ejecting position.

## Patentansprüche

1. Ballenpresse zum Formen eines rundzylindrischen Ballens (B) aus losem Material, wobei die Ballenpresse das Folgende aufweist:
- ein Ballenformmittel (7, 21.1, 21.2) mit einem endlosen Pressmittel (7),
- eine Spannanordnung für das Pressmittel (7),
- ein Ballendrückelement (15), und
- ein Gehäuse (5, 6) mit einem beweglichen Gehäuseteil (6),
wobei die Spannanordnung das Folgende aufweist:
- einen Spannaktuator (10),
- ein erstes schwenkbar montiertes Spannelement (13, 14, 16.1, 16.2) mit mindestens einem ersten Führungselement (16.1, 16.2), und
- ein zweites schwenkbar montiertes Spannelement (17, 18) mit mindestens einem zweiten Führungselement (18),
wobei das Ballendrückelement (15) mit dem ersten Spannelement (13, 14, 16.1, 16.2) mechanisch verbunden ist,
wobei das bewegliche Gehäuseteil (6) zwischen
- einer Ballenformstellung und
- einer Ballenauswurfstellung
beweglich ist,
wobei das Gehäuse (5, 6) mit dem sich in der Ballenformstellung befindenden beweglichen Gehäuseteil (6) eine Ballenformkammer umgibt,
wobei das Ballenformmittel (7, 21.1, 21.2) angeordnet ist, um den zylindrischen Ballen (B) in der von dem Gehäuse (5, 6) umgebenen Ballenformkammer zu bilden,
wobei das Gehäuse (5, 6) mit dem sich in der Ballenauswurfstellung befindenden beweglichen Gehäuseteil (6) eine Öffnung zum Auswerfen des geformten Ballens (B) aus der Ballenformkammer bereitstellt,
wobei das Pressmittel (7)
- um das erste Führungselement (16.1, 16.2) des ersten Spannelements (13, 14, 16.1, 16.2) und
- um das zweite Führungselement (18) des zweiten Spannelements (17, 18) geführt ist, und
wobei der Spannaktuator (10) dazu neigt, das zweite Spannelement (17, 18) weg von dem ersten Spannelement (13, 14, 16.1, 16.2) zum verschwenken,
wodurch eine Spannkraft auf das Pressmittel (7) aufgebracht wird,
wobei das Pressmittel (7), das um beide Spannelemente (13, 14, 16.1, 16.2, 17, 18) herum geführt ist, dazu neigt, das zweite Spannelement (17, 18) gegen die Kraft des Spannaktuators (10) in Richtung des ersten Spannelements (13, 14, 16 .1, 16 .2) zu verschwenken, **wobei**
die Ballenpresse so angeordnet ist, dass der Spannaktuator (10) dazu neigt, das zweite Spannelement (17, 18) weg von dem ersten Spannelement (13, 14, 16.1, 16.2) in beiden Stellungen des beweglichen Gehäuseteils (6) zu verschwenken,
wobei die Ballenpresse so angeordnet ist, dass das Pressmittel (7) die Kraft des Spannaktuators (10) so lange überschreitet, wie sich das bewegliche Gehäuseteil (6) in der Ballenformstellung befindet, und
der Spannaktuator (10) die Kraft des Pressmittels (7) überschreitet, falls sich das bewegliche Gehäuseteil (6) in der Ballenauswurfstellung befindet,
wobei die Spannanordnung so angeordnet ist, dass
ein Verschwenken des zweiten Spannelements (17, 18) weg von dem ersten Spannelement (13, 14, 16.1, 16.2)
das erste Spannelement (13, 14, 16.1, 16.2) in Richtung des Ballens (B) in der Ballenformkammer verschwenkt und
bewirkt, dass das verbundene Ballendrückelement (15)
- den Ballen (B) berührt und
- den Ballen (B) in Richtung des beweglichen Gehäuseteils (6) drückt,
wobei die Ballenpresse einen Abstandssensor aufweist, wobei der Abstandssensor angeordnet ist, um einen Wert zu messen, der den Abstand zwischen den zwei Führungselementen (16.1, 16.2, 18) anzeigt.

2. Ballenpresse nach dem vorhergehenden Anspruch, **dadurch gekennzeichnet, dass** das endlose Pressmittel (7) dazu neigt, Druck auf loses Material auszuüben, das in der Ballenformkammer enthalten ist, wodurch der Ballen (B) in der von dem Gehäuse (5, 6) umgebenen Ballenformkammer unter Druck geformt wird,
wobei das endlose Pressmittel (7) dazu neigt, das zweite Spannelement (17, 18) gegen die Kraft des Spannaktuators (10) in Richtung des ersten Spannelements (13, 14, 16.1, 16.2) zu verschwenken.

3. Ballenpresse nach mindestens einem der vorhergehenden Ansprüche, **dadurch gekennzeichnet, dass** das Gehäuse (5, 6) ein weiteres Gehäuseteil (5) aufweist,
wobei das bewegliche Gehäuseteil (6) montiert ist, um relativ zu dem weiteren Gehäuseteil (5) in die Ballenauswurfstellung bewegt zu werden, und
wobei das erste Spannelement (13, 14, 16.1, 16.2) mit dem weiteren Gehäuseteil (5) schwenkbar verbunden ist, sodass die Schwerkraft dazu neigt, das erste Spannelement (13, 14, 16.1, 16.2) von schräg oberhalb in Richtung eines Ballens (B) in der Ballenformkammer zu verschwenken.

4. Ballenpresse nach mindestens einem der vorhergehenden Ansprüche, **dadurch gekennzeichnet, dass** der Spannaktuator (10)
- mit dem ersten Spannelement (13, 14, 16.1, 16.2) schwenkbar verbunden ist und
- mit dem zweiten Spannelement (17, 18) schwenkbar verbunden ist.

5. Ballenpresse nach mindestens einem der vorhergehenden Ansprüche, **dadurch gekennzeichnet, dass** das zweite Spannelement (17, 18) oberhalb des ersten Spannelements (13, 14, 16.1, 16.2) angeordnet ist,
wobei der Spannaktuator dazu neigt, das zweite Spannelement (17, 18) in eine im Wesentlichen vertikale Ausrichtung zu verschwenken, wenn sich das bewegliche Gehäuseteil (6) in der Ballenauswurfstellung befindet.

## Revendications

1. Dispositif de formation de balle destiné à former une balle cylindrique ronde (B) à partir d'un matériau libre,
dans lequel le dispositif de formation de balle comprend
un moyen de formation de balle (7, 21.1, 21.2) comprenant un moyen de pression sans fin (7),
un agencement de tension destiné au moyen de pression (7),
un élément de poussée de balle (15), et
un carter (5, 6) comprenant une partie de carter mobile (6),
dans lequel l'agencement de tension comprend
un actionneur de tension (10),
un premier élément de tension (13, 14, 16.1, 16.2) monté de manière à pouvoir pivoter, comprenant au moins un premier élément de guidage (16.1, 16.2), et
un second élément de tension (17, 18) monté de manière à pouvoir pivoter, comprenant au moins un second élément de guidage (18),
dans lequel l'élément de poussée de balle (15) est relié mécaniquement au premier élément de tension (13, 14, 16.1, 16.2),
dans lequel la partie de carter mobile (6) peut être déplacée entre une position de formation de balle et
une position d'éjection de balle,
dans lequel le carter (5, 6), lorsque la partie de carter mobile (6) est dans la position de formation de balle, entoure un compartiment de formation de balle,
dans lequel le moyen de formation de balle (7, 21.1, 21.2) est agencé afin de former la balle cylindrique (B) dans le compartiment de formation de balle entouré par le carter (5, 6),
dans lequel le carter (5, 6), lorsque la partie de carter mobile (6) est dans la position d'éjection de balle forme une ouverture afin d'éjecter la balle formée (B) hors du compartiment de formation de balle,
dans lequel le moyen de pression (7) est guidé
autour du premier élément de guidage (16.1, 16.2) du premier élément de tension (13, 14, 16.1, 16.2) et
autour du second élément de guidage (18) du second élément de tension (17, 18), et
dans lequel l'actionneur de tension (10) tend à faire pivoter le second élément de tension (17, 18) à l'écart du premier élément de tension (13, 14, 16.1, 16.2),
appliquant ainsi un effort de tension sur le moyen de pression (7),
dans lequel le moyen de pression (7), lorsqu'il est guidé autour des deux éléments de tension (13, 14, 16.1, 16.2, 17, 18), tend à faire pivoter le second élément de tension (17, 18) contre l'effort de l'actionneur de tension (10)
vers le premier élément de tension (13, 14, 16.1, 16.2),
dans lequel
le dispositif de formation de balle est agencé de telle sorte que l'actionneur de tension (10) tend à faire pivoter le second élément de tension (17, 18) à l'écart du premier élément de tension (13, 14, 16.1, 16.2)
dans les deux positions de la partie de carter mobile (6),
dans lequel le dispositif de formation de balle est agencé de telle sorte que le moyen de pression (7) surpasse l'effort de l'actionneur de tension (10)
aussi longtemps que la partie de carter mobile (6) est dans la position de formation de balle, et
l'actionneur de tension (10) surpasse l'effort du moyen de pression (7) si la partie de carter mobile (6) est dans la position d'éjection de balle,
dans lequel l'agencement de tension est agencé de telle sorte que
le pivotement du second élément de tension (17, 18) à l'écart du premier élément de tension (13, 14, 16.1, 16.2)
fait pivoter le premier élément de tension (13, 14, 16.1, 16.2) vers la balle (B) dans le compartiment de formation de balle et
amène l'élément de poussée de balle (15) relié
à entrer en contact avec la balle (B) et
à pousser la balle (B) vers la partie de carter mobile (6)
dans lequel le dispositif de formation de balle comprend un capteur de distance,
dans lequel le capteur de distance est agencé de manière à mesurer une valeur représentative de la distance entre les deux éléments de guidage (16.1, 16.2, 18).

2. Dispositif de formation de balle selon la revendication précédente,
**caractérisé en ce que**
le moyen de pression sans fin (7) tend à appliquer une pression sur le matériau libre contenu dans le compartiment de formation de balle,
formant ainsi sous pression la balle (B) dans le compartiment de formation de balle entouré par le carter (5, 6),
dans lequel le moyen de pression sans fin (7) tend à faire pivoter le second élément de tension (17, 18) contre l'effort de l'actionneur de tension (10) vers le premier élément de tension (13, 14, 16.1, 16.2).

3. Dispositif de formation de balle selon l'une des revendications précédentes,
**caractérisé en ce que**
le carter (5, 6) comprend une partie de carter supplémentaire (5),
dans lequel la partie de carter mobile (6) est montée de manière à être déplacée par rapport à la partie de carter supplémentaire (5) dans la position d'éjection de balle, et
dans lequel le premier élément de tension (13, 14, 16.1, 16.2) est relié de manière à pouvoir pivoter à la partie de carter supplémentaire (5)
de telle sorte que l'effort de gravité tend à faire pivoter le premier élément de tension (13, 14, 16.1, 16.2) angulairement à partir du dessus vers une balle (B) dans le compartiment de formation de balle.

4. Dispositif de formation de balle selon l'une des revendications précédentes,
**caractérisé en ce que**
l'actionneur de tension (10)
est relié de manière à pouvoir pivoter au premier élément de tension (13, 14, 16.1, 16.2) et
est relié de manière à pouvoir pivoter au second élément de tension (17, 18).

5. Dispositif de formation de balle selon l'une des revendications précédentes, **caractérisé en ce que**
le second élément de tension (17, 18) est positionné au-dessus du premier élément de tension (13, 14, 16.1, 16.2),
dans lequel l'actionneur de tension tend à faire pivoter le second élément de tension (17, 18) suivant une orientation sensiblement verticale
lorsque la partie de carter mobile (6) est dans la position d'éjection de balle.
